# EUROPÄISCHE PATENTANMELDUNG

(11) **EP 3 839 324 A1**
(43) Veröffentlichungstag der Anmeldung: **23.06.2021**
(21) Anmeldenummer: 19216446.5
(22) Anmeldetag: 16.12.2019
(51) Int. Cl.: F21S 41/147, F21S 41/151, F21S 41/26, F21S 41/25, F21S 41/32, F21S 41/40, F21S 41/663, F21S 41/20

(54) **BELEUCHTUNGSVORRICHTUNG FÜR EINEN KRAFTFAHRZEUGSCHEINWERFER**

(71) Anmelder: ZKW Group GmbH, 3250 Wieselburg (AT)
(72) Erfinder: Schoderböck, Peter Martin, 3332 Rosenau am Sonntagberg (AT); Mandl, Bernhard, 3200 Ober-Grafendorf (AT)
(74) Vertreter: Patentanwaltskanzlei Matschnig & Forsthuber OG

(57) **Zusammenfassung**

Die Erfindung betrifft eine Beleuchtungsvorrichtung (1), welche eine Abbildungseinheit (2) umfasst, welche dazu eingerichtet ist, ein Zwischenlichtbild in einer Abbildungsebene (ZBE, ZBE') zu erzeugen, wobei jede Abbildungseinheit (2) aus einer Lichtquelle (3) und einer Kollimatoroptik (4) besteht, wobei die Kollimatoroptik (4) derart ausgebildet ist, dass das von der Lichtquelle (3) emittierte Licht in der Abbildungsebene (ZBE, ZBE') als Zwischenlichtbild abgebildet wird, und wobei die Beleuchtungsvorrichtung (1) eine Projektionslinse (5) umfasst, welche eine Brennebene (BE) aufweist, und Abbildungseinheit (2) und die Projektionsvorrichtung (5) derart zueinander angeordnet sind, dass die Abbildungsebene (ZBE, ZBE') im Wesentlichen in der Brennebene (BE) der zumindest einen Projektionsvorrichtung (5) liegt. Erfindungsgemäß ist die Abbildungseinheit (2) als Konvergenz-Abbildungseinheit (2) ausgebildet ist, die dadurch gekennzeichnet ist, dass der Körper (4A) der Kollimatoroptik (4) derart ausgebildet ist, dass Licht, welches über den Lichteinkoppelbereich (41A) in den Körper (4A) eingekoppelt wird, ein in eine gemeinsame virtuelle Zwischenlichtbildebene (VBE, VBE') konvergierendes Kollimator-Körper-Lichtbündel (KLB, KLB') bilden, wobei die virtuelle Zwischenlichtbildebene (VBE, VBE') in Lichtausbreitungsrichtung vor der Abbildungsebene (ZBE, ZBE') der Konvergenz-Abbildungseinheit (2) liegt, und wobei eine Lichtaustrittsfläche (41C) des Körpers (4A) derart ausgebildet ist, dass bei Austritt des Kollimator-Körper-Lichtbündels (KLB, KLB') aus dem Körper (4A) die Lichtstrahlen an der Lichtaustrittsfläche (41C) derart abgelenkt und zu einem Austritts-Lichtbündel (ALB, ALB') geformt werden, dass die Lichtstrahlen des Austritts-Lichtbündels (ALB, ALB') das Zwischenlichtbild in der Abbildungsebene (ZBE, ZBE') bilden, welches in der Abbildungsebene liegende Zwischenlichtbild von der Projektionsvorrichtung (5) in einen Bereich vor der Beleuchtungsvorrichtung (1), z.B. bei einer in einem Kraftfahrzeug eingebauten Beleuchtungsvorrichtung in einen vor dem Kraftfahrzeug befindlichen Verkehrsraum, als Lichtverteilung oder Teil einer Lichtverteilung abgebildet wird.

## Beschreibung

Die Erfindung betrifft eine Beleuchtungsvorrichtung, insbesondere für einen Kraftfahrzeugscheinwerfer und/oder für eine Heckleuchte eines Kraftfahrzeuges und/oder für eine Signalleuchte für ein Kraftfahrzeug zum Erzeugen zumindest einer Lichtverteilung oder einer Teillichtverteilung, wobei die Beleuchtungsvorrichtung eine oder mehrere Abbildungseinheiten umfasst, wobei jede Abbildungseinheit dazu eingerichtet ist, ein Zwischenlichtbild in einer für die jeweilige Abbildungseinheit spezifischen Abbildungsebene zu erzeugen, wobei jede Abbildungseinheit aus einer Lichtquelle und einer Kollimatoroptik besteht oder eine Lichtquelle und eine Kollimatoroptik umfasst, wobei jede Kollimator-Optik aus einem Körper besteht, welcher aus einem transparenten, lichtleitenden Material gebildet ist, wobei der Körper einen Lichteinkoppelbereich, eine Begrenzungsfläche, sowie eine Lichtaustrittsfläche aufweist, und wobei über den Lichteinkoppelbereich in den Körper eingekoppeltes Licht zum einen Teil direkt in Richtung der Lichtaustrittsfläche propagiert und zum anderen Teil auf die Begrenzungsfläche gelenkt wird, an welcher es in Richtung der Lichtaustrittsfläche reflektiert, vorzugsweise totalreflektiert wird, und wobei die Kollimatoroptik jeder Abbildungseinheit derart ausgebildet ist, dass das von der Lichtquelle der jeweiligen Abbildungseinheit emittierte Licht in der für die jeweilige Abbildungseinheit spezifischen Abbildungsebene als Zwischenlichtbild abgebildet wird, und wobei die Beleuchtungsvorrichtung zumindest eine Projektionsvorrichtung, insbesondere zumindest eine Projektionslinse umfasst, welche zumindest eine Projektionsvorrichtung eine Brennebene aufweist, und wobei die zumindest eine Abbildungseinheit und die zumindest eine Projektionsvorrichtung derart zueinander angeordnet sind, dass die spezifische Abbildungsebene jeder Abbildungseinheit im Wesentlichen in der Brennebene der zumindest einen Projektionsvorrichtung liegt.

In der Entwicklung Beleuchtungsvorrichtungen, beispielsweise für Fahrzeugscheinwerfer wie z.B. Kraftfahrzeugscheinwerfer, spielt das Design eine immer stärkere Rolle. Durch den zunehmend beschränkten Bauraum in Kraftfahrzeugen ergeben sich dabei immer höhere Anforderungen an die Kompaktheit der Beleuchtungsvorrichtungen bei gleichzeitiger Erfüllung der gesetzlich geforderten Lichtwerte.

Es ist eine Aufgabe der Erfindung, die Realisierung von Beleuchtungsvorrichtungen, insbesondere von Beleuchtungsvorrichtungen für Kraftfahrzeuge bzw. für Kraftfahrzeugscheinwerfer zu ermöglichen, die kompakt sind und eine hohe lichttechnische Effizienz aufweisen.

Diese Aufgabe wird mit einer eingangs genannten Beleuchtungsvorrichtung dadurch gelöst, dass erfindungsgemäß zumindest eine der Abbildungseinheiten als sogenannte Konvergenz-Abbildungseinheit ausgebildet ist, wobei eine Konvergenz-Abbildungseinheit dadurch gekennzeichnet ist, dass der Körper der Kollimatoroptik derart ausgebildet ist, dass jener Teil des Lichtes, welcher über den Lichteinkoppelbereich in den Körper eingekoppelt wird und direkt in Richtung der Lichtaustrittsfläche propagiert, sowie der andere Teil des eingekoppelten Lichtes, welcher an der Begrenzungsfläche reflektiert, insbesondere totalreflektiert wird, ein in eine gemeinsame virtuelle Zwischenlichtbildebene konvergierendes Kollimator-Körper-Lichtbündel bilden, wobei die virtuelle Zwischenlichtbildebene in Lichtausbreitungsrichtung vor der Abbildungsebene der Konvergenz-Abbildungseinheit liegt, und wobei die Lichtaustrittsfläche des Körpers derart ausgebildet ist, dass bei Austritt des Kollimator-Körper-Lichtbündels aus dem Körper die Lichtstrahlen an der Lichtaustrittsfläche derart abgelenkt und zu einem Austritts-Lichtbündel geformt werden, dass die Lichtstrahlen des Austritts-Lichtbündels das Zwischenlichtbild in der Abbildungsebene bilden, welches in der Abbildungsebene liegende Zwischenlichtbild von der Projektionsvorrichtung in einen Bereich vor der Beleuchtungsvorrichtung, z.B. bei einer in einem Kraftfahrzeug eingebauten Beleuchtungsvorrichtung in einen vor dem Kraftfahrzeug befindlichen Verkehrsraum, als Lichtverteilung oder Teil einer Lichtverteilung abgebildet wird.

Durch die erfindungsgemäße Ausgestaltung und Verwendung von einer oder mehreren Konvergenz-Abbildungseinheiten kann diese kompakter, insbesondere niedriger und/oder mit geringerer Breite gestaltet werden als herkömmliche, aus dem Stand der Technik bekannte Abbildungseinheiten.

Im Stand der Technik bekannte Abbildungseinheiten weisen beispielsweise eine Kollimatoroptik auf, welche die von einer Lichtquelle, insbesondere einer LED eingekoppelten Lichtstrahlen parallel richten, wobei die parallel gerichteten Lichtstrahlen über eine häufig plane Lichtaustrittsfläche austreten. Dadurch entsteht ein in der Höhe und/oder Breite großes Zwischenlichtbild, welches zur Abbildung eine entsprechend große (hohe, breite) Projektionslinse verlangt.

Bei der vorliegenden Erfindung hingegen kann von der Kollimatoroptik einer Konvergenz-Abbildungseinheit ein kleines Zwischenlichtbild erzeugt werden, wodurch auch die nachgeschaltete Projektionsvorrichtung kleiner als bei vergleichbaren Abbildungseinheiten aus dem Stand der Technik ausfallen kann.

Dazu sind der Lichteinkoppelbereich und vorzugsweise auch die Begrenzungsfläche derart ausgebildet, dass diese das eingekoppelte Licht zu einem Kollimator-Körper-Lichtbündel formen, welches in eine virtuelle Zwischenlichtbildebene konvergierend, wie obenstehend beschrieben.

Eine Konvergenz-Abbildungseinheit bzw. jede Konvergenz-Abbildungseinheit kann derart ausgebildet sein, dass Lichtstrahlen des Austritts-Lichtbündels einer Konvergenz-Abbildungseinheit konvergieren, wobei vorzugsweise die Lichtstrahlen des Austritts-Lichtbündels weniger stark konvergieren als die Lichtstrahlen des Kollimator-Körper-Lichtbündels.

Es kann vorgesehen sein, dass die virtuelle Zwischenlichtbildebene einer Konvergenz-Abbildungseinheit in Lichtfortpflanzungsrichtung nach der Lichtaustrittsfläche liegt.

Beispielsweise ist vorgesehen, dass die Lichtaustrittsfläche der Kollimatoroptik einer Konvergenz-Abbildungseinheit konkav gekrümmt ist.

Vorzugsweise ist die Kollimatoroptik rotationssymmetrisch oder die Lichtaustrittsfläche ist in vertikaler Richtung symmetrisch.

Es kann vorgesehen sein, dass zwischen der zumindest einen Konvergenz-Abbildungseinheit und der Projektionsvorrichtung eine Blendenvorrichtung vorgesehen ist, mit zumindest einer Blendenkante, welche zumindest eine Blendenkante im Wesentlichen in der Brennebene der Projektionsvorrichtung liegt.

Insbesondere kann vorgesehen sein, dass die Blendenvorrichtung eine liegende, vorzugsweise ebene Blende ist, welche die Blendenkante vorzugsweise in einem vorderen, der Projektionsvorrichtung zugewandten Bereich aufweist. Beispielsweise liegt die Blende in einer in etwa horizontalen Ebene, wenn die Beleuchtungsvorrichtung sich in Einbaulage befindet.

Die Blendenkante kann gerade ausgebildet sein, vorzugsweise ist ihr Verlauf aber gekrümmt und folgt vorzugsweise dem Verlauf einer Brennebene bzw. Brennkurve der Projektionsvorrichtung.

Weiters kann es günstig sein, wenn die Blendenvorrichtung, insbesondere die liegende Blende an einer oder beiden Seiten, beispielsweise an ihrer Oberseite und/oder an ihrer Unterseite verspiegelt ausgebildet ist.

Licht aus dem Austritts-Lichtbündel, welches auf die Blende auftrifft, kann auf diese Weise in Richtung der Projektionsvorrichtung reflektiert werden und so genutzt werden, wodurch sich die Effizienz steigert.

Es kann vorgesehen sein, dass Beleuchtungsvorrichtung mehrere Abbildungseinheiten aufweist, und wobei zumindest zwei der Abbildungseinheiten, vorzugsweise alle Abbildungseinheiten, als Konvergenz-Abbildungseinheiten ausgebildet sind.

Es kann vorgesehen sein, dass zumindest eine der Konvergenz-Abbildungseinheiten, vorzugsweise mehrere oder alle Konvergenz-Abbildungseinheiten gemeinsam eine erste Lichtverteilung, z.B. eine Abblendlichtverteilung, erzeugen.

Es kann alternativ oder zusätzlich vorgesehen sein, dass zumindest eine der Konvergenz-Abbildungseinheiten, vorzugsweise mehrere oder alle Konvergenz-Abbildungseinheiten gemeinsam eine zweite Lichtverteilung, z.B. eine Fernlichtverteilung, erzeugen, oder gemeinsam einen Teil einer zweiten Lichtverteilung erzeugen, welcher Teil zusammen mit der ersten Lichtverteilung die zweiten Lichtverteilung, z.B. Fernlichtverteilung, ergibt.

In diesem Zusammenhang kann vorgesehen sein, dass Konvergenz-Abbildungseinheiten, vorzugsweise mehrere oder alle Konvergenz-Abbildungseinheiten, welche gemeinsam eine erste Lichtverteilung erzeugen, auf einer Seite, z.B. oberhalb oder unterhalb der Blendenvorrichtung angeordnet sind.

Weiters kann vorgesehen sein, dass Konvergenz-Abbildungseinheiten, vorzugsweise mehrere oder alle Konvergenz-Abbildungseinheiten, welche gemeinsam eine zweite Lichtverteilung erzeugen, auf einer Seite, z.B. unterhalb oder oberhalb der Blendenvorrichtung, insbesondere auf der anderen Seite als jener Seite, auf welcher die zumindest eine Konvergenz-Abbildungseinheit zur Erzeugung der ersten Lichtverteilung, angeordnet sind.

Beispielsweise sind bei mehreren Konvergenz-Abbildungseinheiten auf einer Seite der Blendenvorrichtung diese Konvergenz-Abbildungseinheiten in einer Ebene, vorzugsweise einer Ebene parallel zu der Blendenvorrichtung, angeordnet.

Es kann dabei vorgesehen sein, dass bei mehreren Konvergenz-Abbildungseinheiten auf einer Seite der Blendenvorrichtung diese Konvergenz-Abbildungseinheiten horizontal und/oder vertikal zueinander verdreht sind, insbesondere derart, dass sich die von den Konvergenz-Abbildungseinheiten in der Zwischenlichtbildebene erzeugten Zwischenlichtbilder, vorzugsweise jeweils die unmittelbar nebeneinander liegenden Zwischenlichtbilder, zumindest teilweise überlappen oder aneinander angrenzen.

Beispielsweise ist die Beleuchtungsvorrichtung als Kraftfahrzeugscheinwerfer oder Heckleuchte eines Kraftfahrzeuges oder als Signalleuchte für ein Kraftfahrzeug ausgebildet ist.

Weiters betrifft die Erfindung eine Vorrichtung umfassend eine oder mehrere Beleuchtungsvorrichtungen wie vorstehend beschrieben, beispielsweise zum Erzeugen einer Fernlichtverteilung, einer Abblendlichtverteilung, oder einer Abblendlicht- und Fernlichtverteilung.

Im Folgenden ist die Erfindung an Hand der Zeichnung näher erörtert. In dieser zeigt
Fig. 1 schematisch eine erfindungsgemäße Beleuchtungsvorrichtung mit einer Konvergenz-Abbildungseinheit in einem Vertikalschnitt,
Fig. 2 schematisch eine erfindungsgemäße Beleuchtungsvorrichtung mit zwei Konvergenz-Abbildungseinheiten in einem Vertikalschnitt,
Fig. 3 beispielhaft eine erfindungsgemäße Beleuchtungsvorrichtung mit mehreren Abbildungseinheiten in einer Ansicht von hinten,
Fig. 4 beispielhaft einen oberen Teil der erfindungsgemäßen Beleuchtungsvorrichtung aus Figur 3 in einer perspektivischen Ansicht,
Fig. 5 eine beispielhafte Lichtverteilung erzeugt mit der Anordnung aus Figur 4,
Fig. 6 beispielhaft den unteren Teil der erfindungsgemäßen Beleuchtungsvorrichtung aus Figur 3 in einer perspektivischen Ansicht,
Fig. 7 eine beispielhafte Lichtverteilung erzeugt mit der Anordnung aus Figur 6,
Fig. 8 beispielhaft eine weitere erfindungsgemäße Beleuchtungsvorrichtung mit mehreren Abbildungseinheiten in einer Ansicht von hinten,
Fig. 9 die Beleuchtungsvorrichtung aus Figur 8 in einer perspektivischen Ansicht, und
Fig. 10 eine mit der Beleuchtungsvorrichtung aus Figur 8 und 9 erzeugten Lichtverteilung.

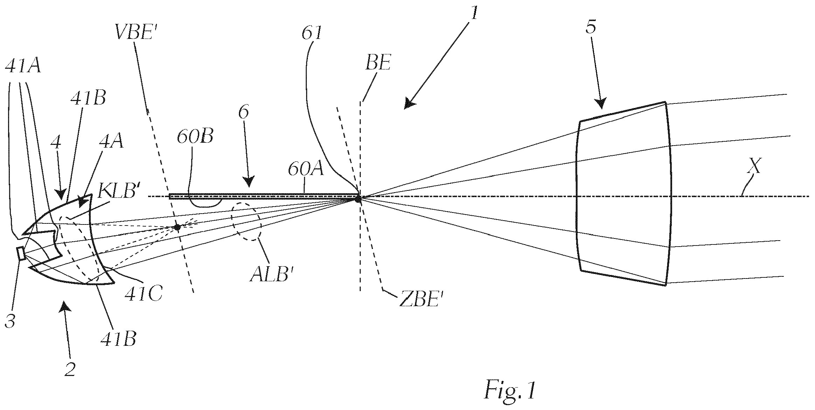

**Figur 1** zeigt schematisch eine Beleuchtungsvorrichtung 1, bei der eine Abbildungseinheit 2 zu erkennen ist. Die Abbildungseinheit 2 umfasst eine Lichtquelle 3, z.B. eine oder mehrere LED's, und eine Kollimatoroptik 4.

Die Kollimator-Optik 4 besteht aus einem Körper 4A, welcher aus einem transparenten, lichtleitenden Material gebildet ist, wobei der Körper 4A einen Lichteinkoppelbereich 41A bzw. Lichteinkoppelflächen 41A, eine Begrenzungsfläche 41B, sowie eine Lichtaustrittsfläche 41C aufweist, und wobei über den Lichteinkoppelbereich 41A in den Körper 4A eingekoppeltes Licht zum einen Teil direkt in Richtung der Lichtaustrittsfläche 41C propagiert und zum anderen Teil auf die Begrenzungsfläche 41B (= Mantelfläche des Körpers 4A) gelenkt wird, an welcher es in Richtung der Lichtaustrittsfläche 41C reflektiert, vorzugsweise totalreflektiert wird.

Die Kollimatoroptik 4 ist derart ausgebildet, dass das von der Lichtquelle 3 emittierte Licht in eine Abbildungsebene ZBE' der Abbildungseinheit als Zwischenlichtbild abgebildet wird.

Beispielsweise liegt das Zwischenlichtbild, im allgemeinen Zusammenhang und nicht nur im Zusammenhang mi der beschriebenen Figur, in Lichtfortpflanzungsrichtung gesehen dort, wo das betrachtete Strahlenbündel die geringste vertikale und/oder horizontale Ausdehnung aufweist.

Weiters umfasst die Beleuchtungsvorrichtung 1 eine Projektionsvorrichtung 5, z.B. in Form einer Projektionslinse 5, welche eine Brennebene BE aufweist, wobei die Brennebene BE im Wesentlichen in der Abbildungsebene ZBE' der Abbildungseinheit 2 liegt. Mit dem Bezugszeichen X ist die optische Achse der Projektionslinse 5 bezeichnet.

Erfindungsgemäß ist Abbildungseinheit 2 als sogenannte Konvergenz-Abbildungseinheit 2 ausgebildet, die dadurch gekennzeichnet ist, dass der Körper 4A der Kollimatoroptik 4 derart ausgebildet ist, dass jener Teil des Lichtes, welcher über den Lichteinkoppelbereich 41A in den Körper 4A eingekoppelt wird und direkt in Richtung der Lichtaustrittsfläche 41C propagiert, sowie der andere Teil des eingekoppelten Lichtes, welcher an der Begrenzungsfläche 41B reflektiert, insbesondere totalreflektiert wird, ein in eine gemeinsame virtuelle Zwischenlichtbildebene VBE' konvergierendes Kollimator-Körper-Lichtbündel KLB' bilden. Dabei liegt die virtuelle Zwischenlichtbildebene VBE' in Lichtausbreitungsrichtung vor der Abbildungsebene ZBE' der Konvergenz-Abbildungseinheit 2 liegt.

Der Begriff "virtuell" ist dabei derart zu verstehen, dass in dieser virtuellen Abbildungsebene ein (reales) Zwischenbild nur dann erzeugt werden würde, wenn die Lichtstrahlen an der Lichtaustrittsfläche 41C des Körpers 4A keinerlei Ablenkung erfahren würden, d.h. auf die Lage der virtuellen Zwischenbildebene nur die Form des Körpers 4A (Lichteinkoppelbereich 41A und Mantelfläche 41B), aber ohne Mitwirkung der Lichtaustrittsfläche 41C, Einfluss hätte.

Die Lichtaustrittsfläche 41C des Körpers 4A ist nunmehr derart ausgebildet, dass bei Austritt des Kollimator-Körper-Lichtbündels KLB' aus dem Körper 4A die (in die virtuelle Zwischenbildebene konvergierenden) Lichtstrahlen an der Lichtaustrittsfläche 41C derart abgelenkt und zu einem Austritts-Lichtbündel ALB' geformt werden, dass die Lichtstrahlen des Austritts-Lichtbündels ALB' das (reale) Zwischenlichtbild in der Abbildungsebene ZBE' bilden, welches von der Projektionsvorrichtung 5 in einen Bereich vor der Beleuchtungsvorrichtung 1, z.B. bei einer in einem Kraftfahrzeug eingebauten Beleuchtungsvorrichtung in einen vor dem Kraftfahrzeug befindlichen Verkehrsraum, als Lichtverteilung oder Teil einer Lichtverteilung abgebildet wird.

Vorzugsweise ist vorgesehen, dass der Körper 4A derart ausgebildet ist, dass Lichtstrahlen des Austritts-Lichtbündels ALB' konvergieren, wobei vorzugsweise die Lichtstrahlen des Austritts-Lichtbündels ALB' weniger stark konvergieren als die Lichtstrahlen des Kollimator-Körper-Lichtbündels KLB'.

Weiters kann bei der gezeigten Ausführungsform als vorteilhafte Ausgestaltung vorgesehen sein, dass die virtuelle Zwischenlichtbildebene VBE' in Lichtfortpflanzungsrichtung nach der Lichtaustrittsfläche 41C des Körpers 4A liegt.

Die Lichtaustrittsfläche 41C des Körpers 4A der Kollimatoroptik 4 der Konvergenz-Abbildungseinheit 2 ist vorzugweise konkav gekrümmt, und beispielsweise rotationssymmetrisch oder in vertikaler Richtung symmetrisch.

Die aus der Projektionsvorrichtung 5 austretenden Lichtstrahlen bilden in dem gezeigten Beispiel gemäß **Figur 1** den oberhalb einer Hell-Dunkel-Grenze liegenden Bereich einer Fernlichtverteilung.

Optional ist bei dem gezeigten Beispiel weiters eine Blendenvorrichtung 6 vorgesehen, welche zwischen der Konvergenz-Abbildungseinheit 2 und der Projektionsvorrichtung 5 angeordnet ist. Die Blendenvorrichtung weist eine Blendenkante 61 auf, welche vorzugsweise im Wesentlichen in der Brennebene BE der Projektionsvorrichtung 5 liegt bzw. vorzugsweise vor der Brennebene BE, insbesondere knapp vor dieser liegt.

Vorzugsweise kann vorgesehen sein, dass die Blendenvorrichtung 6 eine liegende, vorzugsweise ebene Blende 60 ist, wobei die Blendenkante 61 in einem vorderen, der Projektionsvorrichtung 5 zugewandten Bereich liegt. Beispielsweise liegt die Blende in einer in etwa horizontalen Ebene, wenn sich die Beleuchtungsvorrichtung 1 in Einbaulage befindet. Vorzugsweise enthält die horizontale Ebene die optische Achse X.

Die Blendenkante 61 kann gerade ausgebildet sein, vorzugsweise ist ihr Verlauf aber gekrümmt und folgt vorzugsweise dem Verlauf einer Brennebene bzw. Brennkurve der Projektionsvorrichtung 5.

Durch die Blendenvorrichtung kann Licht, welches in unerwünschter Weise vor Brennebene BE über die optische Achse X gelangen würde, ausgeblendet werden.

Günstig kann es sein, wenn die Blendenvorrichtung 6, insbesondere die liegende Blende 60 an einer oder beiden Seiten, beispielsweise an ihrer Oberseite 60A und/oder an ihrer Unterseite 60B verspiegelt bzw. Licht reflektierend ausgebildet ist. Licht aus dem Austritts-Lichtbündel ALB', welches an der Unterseite auf die Blende auftrifft, kann auf diese Weise in Richtung der Projektionsvorrichtung 5 reflektiert werden und genutzt werden, wodurch sich die Effizienz steigert und/oder z.B. bestimmte Bereiche oberhalb der Hell-Dunkel-Grenze beleuchtet werden können, etwa zur Erzeugung eines Sign-Lights.

Die Blendenvorrichtung 6 kann auch derart ausgelegt und/oder angeordnet sein, z.B. wie oben beschrieben, dass in der Lichtverteilung die Blendenkante 61 als die (Teil-)Lichtverteilung nach unten begrenzende Hell-Dunkel-Grenze abgebildet wird. In diesem Fall ist es von Vorteil, wenn die Blendenkante 61 vor der Brennebene BE liegt, damit die Abbildung der Blendenkante 61 defokussiert und somit nicht zu scharf ist.

Durch die Neigung der Kollimator-Abbildungseinheit 2 nach oben verläuft die Zwischenbildebene ZBE' nicht parallel zu der Brennebene BE sondern ist zu dieser geneigt.

Vorzugsweise schneidet die Zwischenbildebene ZBE' die Brennebene BE dabei unterhalb der optischen Achse X enthält, insbesondere knapp unterhalb der optischen Achse (bei typischen Systemen ca. 0,1 mm darunter).

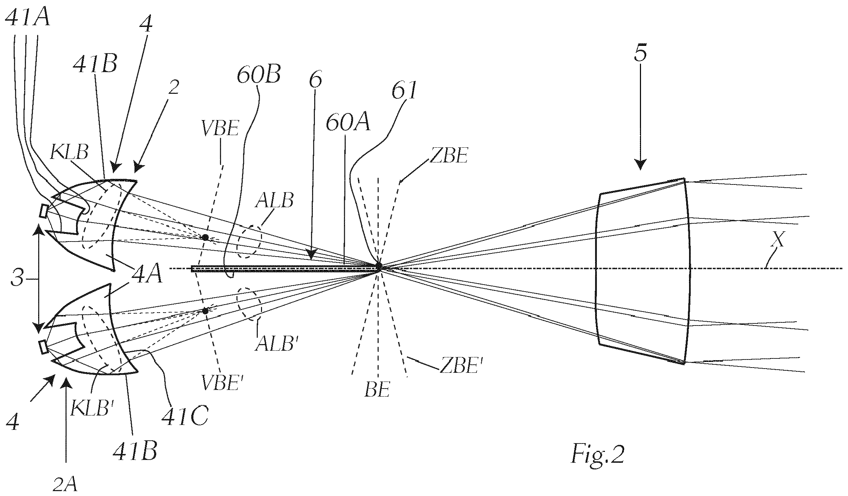

**Figur 2** zeigt einen Aufbau ähnlich zu jenem aus **Figur 1**, mit dem Unterscheid, dass hier in einem oberen Bereich eine zweite Konvergenz-Abbildungseinheit 2 vorgesehen ist. Die Anordnung in **Figur 2** verfügt wiederum über die optionale Blendenvorrichtung 6, kann aber genauso wie in **Figur 1** ohne diese funktionieren.

Die obere Konvergenz-Abbildungseinheit 2 weist denselben strukturell-optischen Aufbau auf wie die untere Einheit 2, grundsätzlich können diese auch identisch ausgebildet sein. Die obere Konvergenz-Abbildungseinheit 2 erzeugt ein Kollimator-Lichtbündel KLB, welches in eine virtuelle Zwischenlichtbildebene VBE konvergiert und von der Lichtaustrittsfläche 41C des Körpers 4A zu einem Austrittslichtbündel ALB geformt wird, welches in eine Zwischenlichtbildebene ZBE abgebildet wird, die in etwa in der Brennebene BE der Projektionsvorrichtung 5 liegt, sodass das Zwischenlichtbild aus der Zwischenlichtbildebene ZBE als Lichtverteilung, im konkreten Fall als Abblendlichtverteilung abgebildet wird.

Die untere Abbildungseinheit 2 erzeugt eine Lichtverteilung wie an Hand von **Figur 1** erläutert.

Wenn eine Blendenvorrichtung 61 vorhanden ist, ist diese vorzugsweise wie in Zusammenhang mit **Figur 2** beschrieben angeordnet und/oder ausgebildet, sodass vorzugsweise die Blendenkante 61 in der Abblendlichtverteilung als die Lichtverteilung nach oben hin begrenzende Hell-Dunkel-Grenze abgebildet wird.

Allgemein gilt, dass bei Vorhandensein einer Blendenvorrichtung 6 diese an der Bildung der Lichtverteilung mitwirken kann, beispielsweise indem die Blendenkante 61 im Lichtbild als Hell-Dunkel-Grenze der Lichtverteilung, welche diese Lichtverteilung nach oben hin abschließt, abgebildet wird. Im Falle, dass auf eine Blendenvorrichtung 6 verzichtet wird, gilt generell, dass die Projektionsvorrichtung, beispielsweise die Projektionslinse so abzustimmen ist, dass die gewünschte Lichtverteilung oder die gewünschten Lichtverteilungen, etwa Abblendlicht- und/oder Fernlichtverteilung erzeugt wird.

In dem gezeigten Beispiel nach **Figur 2** (und auch nach **Figur 1**) ist die unteren Einheit 2 leicht nach oben geneigt, und obere Einheit leicht nach unten geneigt. Entsprechend liegen die Zwischenbildebenen ZBE, ZBE' nicht parallel bzw. deckungsgleich zueinander, sondern sind zueinander geneigt und schneiden sich in etwa im Bereich der Brennebene BE der Projektionsvorrichtung 5.

Vorzugsweise schneidet die Zwischenbildebene ZBE' die Brennebene BE dabei unterhalb der optischen Achse X, insbesondere knapp unterhalb der optischen Achse (bei typischen Systemen ca. 0,1 mm darunter), während die Zwischenbildebene ZBE der oberen Abbildungseinheit 2 die Brennebene knapp oberhalb der optischen Achse, insbesondere knapp oberhalb der optischen Achse (z.B. ca. 0,1 mm darüber) schneidet.

Abhängig davon, ob die Projektionsvorrichtung in vertikaler Richtung auf die Lichtstrahlen invertierend wirkt (wie in den gezeigten Beispielen) oder nicht, können diese Zusammenhänge natürlich auch genau umgekehrt sein.

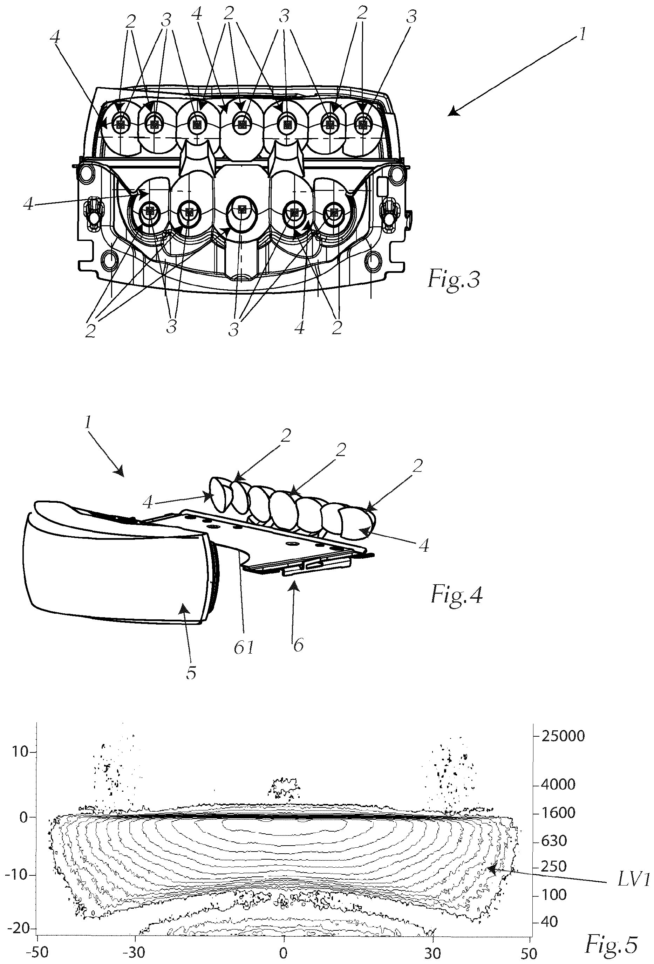

**Figur 3** zeigt eine Beleuchtungsvorrichtung mit 2 Reihen von Konvergenz-Abbildungseinheiten 2, einer oberen Reihe aus sieben Einheiten 2 (Konvergenz-Abbildungseinheiten) und einer unteren Reihe aus fünf Einheiten 2. Jede Einheit verfügt über eine Lichtquelle 3 und einen Kollimator 4 wie oben an Hand der **Figuren 1** **und** **2** beschrieben.

**Figur 4** zeigt die Beleuchtungsvorrichtung aus **Figur 3**, allerdings lediglich die obere Reihe der Einheiten 2. Wie zu erkennen, können zu einer optional vertikalen Verkippung der Einheiten 2 wie in **Figur 2** dargestellt diese auch in horizontaler Richtung verkippt sein, um die Teil-Lichtbilder, welche von den einzelnen Einheiten 2 erzeugt werden, zu einer gewünschten Gesamtlichtverteilung zusammenzusetzen. In dieser Ausführungsform ist außerdem optional, wie gezeigt, eine Blendenvorrichtung 6 mit gekrümmter Blendenkante 61 vorgesehen.

Durch das horizontale Verdrehen der Konvergenz-Abbildungseinheiten 2 kann z.B. erreicht werden, dass die in der jeweiligen Zwischenlichtbildebene erzeugten Zwischenlichtbilder, vorzugsweise jeweils die unmittelbar nebeneinander liegenden Zwischenlichtbilder der einzelnen Einheiten 2, insbesondere der Einheiten einer Reihe, einander seitlich, d.h. in horizontaler Richtung, teilweise überlappen oder unmittelbar aneinander angrenzen.

**Figur 5** zeigt die mit der Anordnung aus **Figur 4** erzeugte Lichtverteilung LV1, bei der es sich um eine Abblendlichtverteilung mit HD-Grenze handelt. Die Abblendlichtverteilung kann dabei von lediglich einer einzigen gezeigten Anordnung gemäß **Figur 4** erzeugt werden, oder durch Überlagerung der Lichtverteilungen von zwei oder mehreren solcher Anordnungen, die auf zwei oder mehrere Beleuchtungsvorrichtungen z.B. in einem oder in zwei Scheinwerfern verteilt sind.

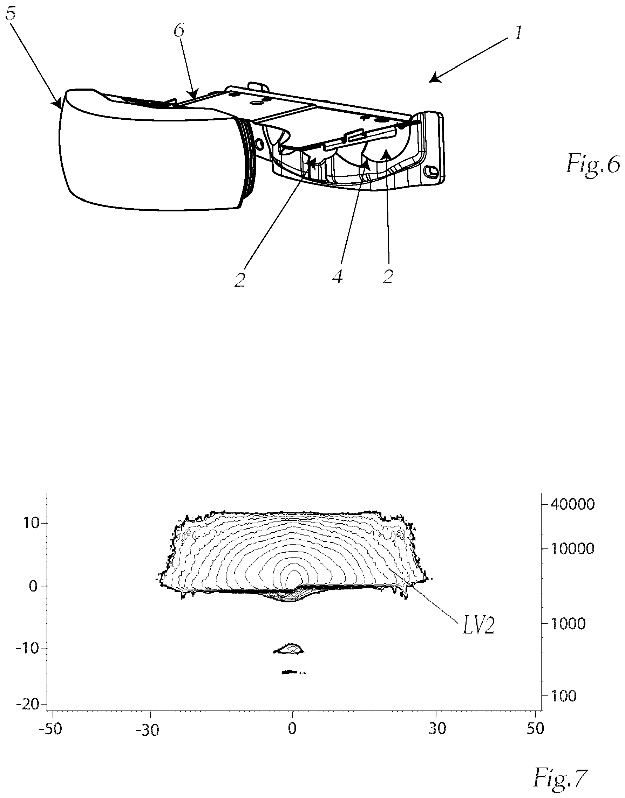

**Figur 6** zeigt analog den unteren Teil der Beleuchtungsvorrichtung aus **Figur 4**, wiederum mit optional horizontal und/oder vertikal verdrehten Einheiten 2, die resultierende Lichtverteilung LV2 ist in **Figur 7** dargestellt und zeigt den oberhalb der horizontalen 0°-0°-Linie oder oberhalb der HD-Linie liegenden Bereich einer Fernlichtverteilung, der zusammen mit der Lichtverteilung aus **Figur 5** eine Fernlichtverteilung bildet. Der für die Bildung diesen oberen Teils einer Fernlichtverteilung relevante Bereich kann dabei von lediglich einer gezeigten Anordnung gemäß **Figur 6** erzeugt werden, oder durch Überlagerung der Lichtverteilungen von zwei oder mehreren solcher Anordnungen, die auf zwei oder mehrere Beleuchtungsvorrichtungen z.B. in einem oder in zwei Scheinwerfern verteilt sind.

Vorzugsweise sind die Anordnung aus **Figur 4** und **Figur 6** in einer einzigen Beleuchtungsvorrichtung wie in **Figur 3** gezeigt realisiert (wobei die Blende 6 lediglich der Darstellung halber 2 mal, in jeder Figur einmal, gezeigt ist; tatsächlich ist lediglich eine Blende 6 vorhanden, sofern sie überhaupt vorgesehen ist). Es kann aber auch jede der Anordnungen aus **Figur 4** bzw. **Figur 6**, jeweils mit oder ohne Blende, als eigenständige Beleuchtungsvorrichtung realisiert sein.

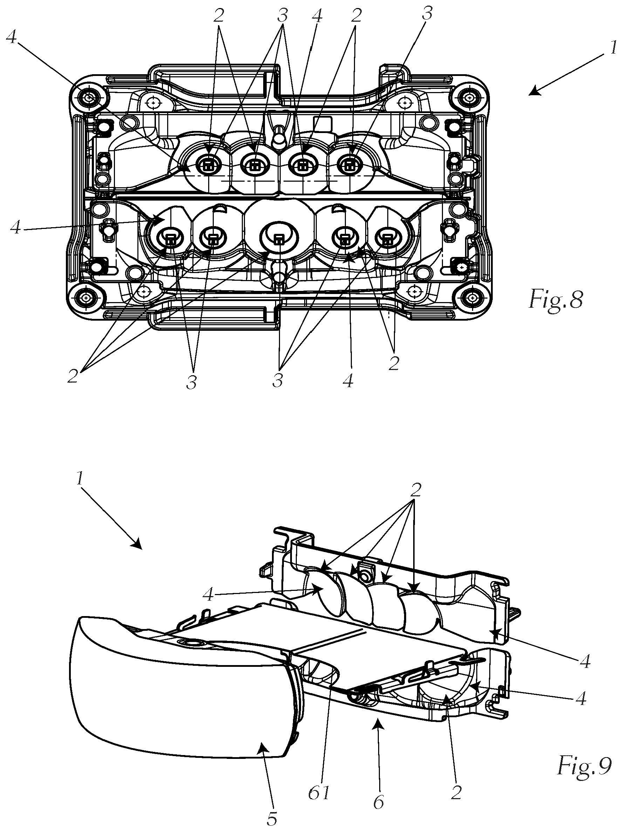

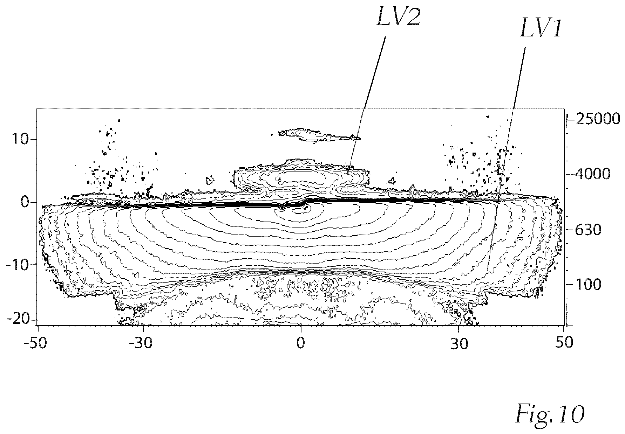

**Figur 8 und 9** zeigen noch eine beispielhafte Realisierungsmöglichkeit einer erfindungsgemäßen Beleuchtungsvorrichtung 1, mit vier Einheiten 2 in der oberen Reihe und fünf Einheiten 2 in der unteren Reihe. Auch hier ist eine optionale Blende 6 gezeigt, die Lichtverteilungen LV1 und LV2 sind in **Figur 10** dargestellt.

Wie beschrieben, kann eine erfindungsgemäße Beleuchtungsvorrichtung z.B. für einen Kraftfahrzeugscheinwerfer vorgesehen sein oder einen solchen bilden. Eine erfindungsgemäße Beleuchtungsvorrichtung kann in diesem Zusammenhang z.B. zur Erzeugung einer (symmetrischen oder asymmetrischen) Abblendlichtverteilung, einer Fernlichtverteilung, einer Vorfeldlichtverteilung, eines Abbiegelichtes etc., oder jeder beliebigen einer Kombination solcher Lichtverteilungen verwendet werden.

Die erfindungsgemäße Beleuchtungsvorrichtung kann auch in einer Heckleuchte, Signalleuchte etc. eines Kraftfahrzeuges zum Einsatz kommen.

Auf Grund der erfindungsgemäßen Ausgestaltung, siehe insbesondere **Figur 1** **und** **2**, wäre bei gleicher Länge des Gesamtsystems und gleichem Abstand von der Lichtquelle zur Zielebene/Brennebene ZBE, ZBE'/BE bzw. der Projektionsvorrichtung zur Zielebene bei einer Anordnung nach dem Stand der Technik ein wesentlich größerer, d.h. höherer und/oder breiterer Kollimator sowie entsprechend eine größere Projektionsvorrichtung notwendig, da im Stand der Technik die Lichtstrahlen eine wesentlich größere Divergenz als bei der erfindungsgemäßen Lösung und somit ein wesentlich größeres Zwischenlichtbild aufweisen.

## Patentansprüche

1. Beleuchtungsvorrichtung (1), insbesondere für einen Kraftfahrzeugscheinwerfer und/oder für eine Heckleuchte eines Kraftfahrzeuges und/oder für eine Signalleuchte für ein Kraftfahrzeug zum Erzeugen zumindest einer Lichtverteilung (LV1, LV2) oder einer Teillichtverteilung, wobei die Beleuchtungsvorrichtung (1) eine oder mehrere Abbildungseinheiten (2) umfasst, wobei jede Abbildungseinheit (2) dazu eingerichtet ist, ein Zwischenlichtbild in einer für die jeweilige Abbildungseinheit spezifischen Abbildungsebene (ZBE, ZBE') zu erzeugen, wobei jede Abbildungseinheit (2) aus einer Lichtquelle (3) und einer Kollimatoroptik (4) besteht oder eine Lichtquelle (3) und eine Kollimatoroptik (4) umfasst, wobei jede Kollimator-Optik (4) aus einem Körper (4A) besteht, welcher aus einem transparenten, lichtleitenden Material gebildet ist, wobei der Körper (4A) einen Lichteinkoppelbereich (41A), eine Begrenzungsfläche (41B), sowie eine Lichtaustrittsfläche (41C) aufweist, und wobei über den Lichteinkoppelbereich (41A) in den Körper (4A) eingekoppeltes Licht zum einen Teil direkt in Richtung der Lichtaustrittsfläche (41C) propagiert und zum anderen Teil auf die Begrenzungsfläche (41B) gelenkt wird, an welcher es in Richtung der Lichtaustrittsfläche (41C) reflektiert, vorzugsweise totalreflektiert wird, und wobei die Kollimatoroptik (4) jeder Abbildungseinheit (2) derart ausgebildet ist, dass das von der Lichtquelle (3) der jeweiligen Abbildungseinheit (2) emittierte Licht in der für die jeweilige Abbildungseinheit (2) spezifischen Abbildungsebene (ZBE, ZBE') als Zwischenlichtbild abgebildet wird, und wobei die Beleuchtungsvorrichtung (1) zumindest eine Projektionsvorrichtung (5), insbesondere zumindest eine Projektionslinse (5) umfasst, welche zumindest eine Projektionsvorrichtung (5) eine Brennebene (BE) aufweist, und wobei die zumindest eine Abbildungseinheit (2) und die zumindest eine Projektionsvorrichtung (5) derart zueinander angeordnet sind, dass die spezifische Abbildungsebene (ZBE, ZBE') jeder Abbildungseinheit (2) im Wesentlichen in der Brennebene (BE) der zumindest einen Projektionsvorrichtung (5) liegt,
**dadurch gekennzeichnet, dass**
zumindest eine der Abbildungseinheiten (2) als sogenannte Konvergenz-Abbildungseinheit (2) ausgebildet ist, wobei eine Konvergenz-Abbildungseinheit (2) **dadurch gekennzeichnet ist, dass** der Körper (4A) der Kollimatoroptik (4) derart ausgebildet ist, dass jener Teil des Lichtes, welcher über den Lichteinkoppelbereich (41A) in den Körper (4A) eingekoppelt wird und direkt in Richtung der Lichtaustrittsfläche (41C) propagiert, sowie der andere Teil des eingekoppelten Lichtes, welcher an der Begrenzungsfläche (41B) reflektiert, insbesondere totalreflektiert wird, ein in eine gemeinsame virtuelle Zwischenlichtbildebene (VBE, VBE') konvergierendes Kollimator-Körper-Lichtbündel (KLB, KLB') bilden, wobei die virtuelle Zwischenlichtbildebene (VBE, VBE') in Lichtausbreitungsrichtung vor der Abbildungsebene (ZBE, ZBE') der Konvergenz-Abbildungseinheit (2) liegt, und wobei die Lichtaustrittsfläche (41C) des Körpers (4A) derart ausgebildet ist, dass bei Austritt des Kollimator-Körper-Lichtbündels (KLB, KLB') aus dem Körper (4A) die Lichtstrahlen an der Lichtaustrittsfläche (41C) derart abgelenkt und zu einem Austritts-Lichtbündel (ALB, ALB') geformt werden, dass die Lichtstrahlen des Austritts-Lichtbündels (ALB, ALB') das Zwischenlichtbild in der Abbildungsebene (ZBE, ZBE') bilden, welches in der Abbildungsebene liegende Zwischenlichtbild von der Projektionsvorrichtung (5) in einen Bereich vor der Beleuchtungsvorrichtung (1), z.B. bei einer in einem Kraftfahrzeug eingebauten Beleuchtungsvorrichtung in einen vor dem Kraftfahrzeug befindlichen Verkehrsraum, als Lichtverteilung oder Teil einer Lichtverteilung abgebildet wird.

2. Beleuchtungsvorrichtung nach Anspruch 1, wobei alle Lichtstrahlen des Austritts-Lichtbündels (ALB, ALB') einer Konvergenz-Abbildungseinheit (2) konvergieren, wobei vorzugsweise die Lichtstrahlen des Austritts-Lichtbündels (ALB, ALB') weniger stark konvergieren als die Lichtstrahlen des Kollimator-Körper-Lichtbündels (KLB).

3. Beleuchtungsvorrichtung nach Anspruch 1 oder 2, wobei die virtuelle Zwischenlichtbildebene (VBE, VBE') einer Konvergenz-Abbildungseinheit (2) in Lichtfortpflanzungsrichtung nach der Lichtaustrittsfläche (41C) liegt.

4. Beleuchtungsvorrichtung nach einem der Ansprüche 1 bis 3, wobei die Lichtaustrittsfläche (41C) der Kollimatoroptik (4) einer Konvergenz-Abbildungseinheit (2) konkav gekrümmt ist.

5. Beleuchtungsvorrichtung nach einem der Ansprüche 1 bis 4, wobei zwischen der zumindest einen Konvergenz-Abbildungseinheit (2) und der Projektionsvorrichtung (5) eine Blendenvorrichtung (6) vorgesehen ist, mit zumindest einer Blendenkante (61), welche zumindest eine Blendenkante (61) im Wesentlichen in der Brennebene (BE) der Projektionsvorrichtung (5) liegt, wobei beispielsweise die Blendenvorrichtung (6) eine liegende, vorzugsweise ebene Blende (60) ist, welche die Blendenkante (61) vorzugsweise in einem vorderen, der Projektionsvorrichtung (5) zugewandten Bereich aufweist.

6. Beleuchtungsvorrichtung nach Anspruch 5, wobei die Blendenvorrichtung (6), insbesondere die liegende Blende (60) an einer oder beiden Seiten, beispielsweise an ihrer Oberseite (60A) und/oder an ihrer Unterseite (60B) verspiegelt ausgebildet ist.

7. Beleuchtungsvorrichtung nach einem der Ansprüche 1 bis 6, wobei die Beleuchtungsvorrichtung (1) mehrere Abbildungseinheiten aufweist, und wobei zumindest zwei der Abbildungseinheiten (2), vorzugsweise alle Abbildungseinheiten (2), als Konvergenz-Abbildungseinheiten (2) ausgebildet sind.

8. Beleuchtungsvorrichtung nach einem der Ansprüche 1 bis 7, wobei zumindest eine der Konvergenz-Abbildungseinheiten (2), vorzugsweise mehrere oder alle Konvergenz-Abbildungseinheiten (2) gemeinsam eine erste Lichtverteilung (LV1), z.B. eine Abblendlichtverteilung, erzeugen.

9. Beleuchtungsvorrichtung nach einem der Ansprüche 1 bis 8, wobei zumindest eine der Konvergenz-Abbildungseinheiten (2), vorzugsweise mehrere oder alle Konvergenz-Abbildungseinheiten (2) gemeinsam eine zweite Lichtverteilung (LV2), z.B. eine Fernlichtverteilung, erzeugen, oder gemeinsam einen Teil einer zweiten Lichtverteilung (LV2) erzeugen, welcher Teil zusammen mit der ersten Lichtverteilung (LV1) die zweiten Lichtverteilung, z.B. Fernlichtverteilung, ergibt.

10. Beleuchtungsvorrichtung nach einem der Ansprüche 5 bis 9, wobei Konvergenz-Abbildungseinheiten (2), vorzugsweise mehrere oder alle Konvergenz-Abbildungseinheiten (2), welche gemeinsam eine erste Lichtverteilung (LV1) erzeugen, auf einer Seite, z.B. oberhalb oder unterhalb der Blendenvorrichtung (6) angeordnet sind.

11. Beleuchtungsvorrichtung nach einem der Ansprüche 5 bis 10, wobei Konvergenz-Abbildungseinheiten (2), vorzugsweise mehrere oder alle Konvergenz-Abbildungseinheiten (2), welche gemeinsam eine zweite Lichtverteilung (LV2) erzeugen, auf einer Seite, z.B. unterhalb oder oberhalb der Blendenvorrichtung (6), insbesondere auf der anderen Seite als jener Seite, auf welcher die zumindest eine Konvergenz-Abbildungseinheit (2) zur Erzeugung der ersten Lichtverteilung (LV1), angeordnet sind.

12. Beleuchtungsvorrichtung nach einem der Ansprüche 5 bis 11, wobei bei mehreren Konvergenz-Abbildungseinheiten (2) auf einer Seite der Blendenvorrichtung (6) diese Konvergenz-Abbildungseinheiten (2) in einer Ebene, vorzugsweise einer Ebene parallel zu der Blendenvorrichtung (6), angeordnet sind.

13. Beleuchtungsvorrichtung nach einem der Ansprüche 5 bis 12, wobei bei mehreren Konvergenz-Abbildungseinheiten (2) auf einer Seite der Blendenvorrichtung (6) diese Konvergenz-Abbildungseinheiten (2) horizontal und/oder vertikal zueinander verdreht sind, insbesondere derart, dass sich die von den Konvergenz-Abbildungseinheiten (2) in der Zwischenlichtbildebene (ZBE, ZBE') erzeugten Zwischenlichtbilder, vorzugsweise jeweils die unmittelbar nebeneinander liegenden Zwischenlichtbilder, zumindest teilweise überlappen oder aneinander angrenzen.

14. Beleuchtungsvorrichtung nach einem der Ansprüche 1 bis 13, wobei die Beleuchtungsvorrichtung als Kraftfahrzeugscheinwerfer oder Heckleuchte eines Kraftfahrzeuges oder als Signalleuchte für ein Kraftfahrzeug ausgebildet ist.

15. Vorrichtung umfassend eine oder mehrere Beleuchtungsvorrichtungen nach einem der Ansprüche 1 bis 14, beispielsweise zum Erzeugen einer Fernlichtverteilung, einer Abblendlichtverteilung, oder einer Abblendlicht- und Fernlichtverteilung.
